# EUROPEAN PATENT APPLICATION

(11) **EP 4 231 740 A1**
(43) Date of publication of application: **23.08.2023**
(21) Application number: 20957022.5
(22) Date of filing: 13.10.2020
(51) Int. Cl.: H04W 72/04

(54) **MULTI-CONNECTION COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/120718
(87) International publication number: WO 2022/077241

(57) **Abstract**

Disclosed in the present application are a multi-connection communication method and apparatus, a device, and a storage medium. The method comprises: determining information associated with a restrictive target wake time (TWT) service period (SP); and scheduling communication transmission between a first station and an access point according to the information associated with the restrictive TWT SP, so as to prevent the first station from performing the communication transmission within the restrictive TWT SP. According to the technical solution in embodiments of the present application, in a multi-connection communication process, an interference station avoids interference to the communication transmission within the restrictive TWT SP by obtaining the information associated with the restrictive TWT SP.

## Description

### FIELD

The present disclosure generally relates to the field of wireless communication technology, in particular to a multi-link communication method, a multi-link communication apparatus, a multi-link communication device, and a storage medium.

### BACKGROUND

In May 2018, IEEE802.11 established study group (SG) IEEE802.11be to study a next generation of mainstream (802.11a/b/g/n/ac) Wi-Fi technology. The research scope of IEEE802.11be is a bandwidth transmission of 320MHz, aggregation and cooperation of multiple frequency bands, etc. IEEE802.11be is expected to improve transmission rate and throughput by at least four times compared to IEEE 802.11ax. Main application scenarios of IEEE802.1 The are a video transmission, AR, VR, etc. The aggregation and cooperation of multiple frequency bands refers to a simultaneous communication between devices in frequency bands of 2.4GHz, 5.8GHz, and 6 to 7GHz. It is necessary to define a new media access control (MAC) mechanism to manage the simultaneous communication between devices in multiple frequency bands. In addition, IEEE802.11be is expected to support a low time delay transmission.

In IEEE802.11be, a transmission of time sensitive network (TSN) data is supported, and its time delay is generally needed to be less than 1ms, or a transmission of data such as AR/VR is supported, and its time delay is generally needed to be 1 to 10 ms, and for a transmission of data such as an interactive video or an automatic driving control, its time delay is generally needed to be 10 to 50 ms.

In IEEE802.11be, a restricted target wake service period is proposed for delay processing of a periodic TSN data transmission.

### SUMMARY

In view of the above-mentioned defects or deficiencies in the prior art, it is expected to provide a multi-link communication method, a multi-link communication apparatus, a multi-link communication device, and a storage medium, so as to avoid conflict between a restricted target wake service period of different links and a transmission of a data frame in a multi-link communication scenario.

In a first aspect, an embodiment of the present disclosure provides a multi-link communication method. The method includes determining information associated with a restricted target wake time (TWT) service period (SP), and scheduling a communication transmission between a first station and an access point according to the information associated with the restricted TWT SP, so as to prevent the first station from performing the communication transmission within the restricted TWT SP.

In a second aspect, an embodiment of the present disclosure provides a multi-link communication method. The method includes determining a restricted target wake time (TWT) service period (SP) of a second station, and scheduling a communication transmission between an access point and at least one of a first station and the second station according to the restricted TWT SP, so as to prevent the first station from performing the communication transmission within the restricted TWT SP.

In a third aspect, an embodiment of the present disclosure provides a multi-link communication apparatus. The apparatus includes a station side information determining module configured to determine information associated with a restricted target wake time (TWT) service period (SP), and a station side scheduling module configured to schedule a communication transmission between a first station and an access point according to the information associated with the restricted TWT SP, so as to prevent the first station from performing the communication transmission within the restricted TWT SP.

In a fourth aspect, an embodiment of the present disclosure provides a multi-link communication apparatus. The apparatus includes an access point side determining module configured to determine a restricted target wake time (TWT) service period (SP) of a second station, and an access point side scheduling module configured to schedule a communication transmission between an access point and at least one of a first station and the second station according to the restricted TWT SP, so as to prevent the first station from performing the communication transmission within the restricted TWT SP.

In a fifth aspect, an embodiment of the present disclosure provides a multi-link communication device. The device includes a memory, a processor, and a computer program stored in the memory and executable on the processor, in which the processor is configured to implement the method described in the embodiment of the present disclosure when running the computer program.

In a sixth aspect, an embodiment of the present disclosure provides a computer-readable storage medium having stored therein computer programs that, when executed by a processor, cause the method described in the embodiment of the present disclosure to be implemented.

According to the multi-link communication method, the multi-link communication apparatus, the multi-link communication device, and the storage medium provided in the embodiment of the present disclosure, information associated with a restricted target wake time (TWT) service period (SP) is determined. Then, a communication transmission between a first station and an access point is scheduled according to the information associated with the restricted TWT SP, so as to prevent the first station from performing the communication transmission within the restricted TWT SP. According to the embodiment of the present disclosure, the information associated with the restricted TWT SP is acquired through the first station, so as to prevent interference with the communication transmission within the restricted TWT SP, and improve a system throughput when satisfying different service delay requirements.

### BRIEF DESCRIPTION OF THE DRAWINGS

Other features, objects and advantages of the present disclosure will be more apparent by reading the detailed description of non-limiting embodiments with reference to the following accompanying drawings.
FIG. 1 is a schematic diagram showing a multi-link communication application scenario provided by an embodiment of the present disclosure.
FIG. 2 is a flow chart showing a multi-link communication method provided by an embodiment of the present disclosure.
FIG. 3 is an interactive schematic diagram showing a multi-link communication method provided by an embodiment of the present disclosure.
FIG. 4 is another interactive schematic diagram showing a multi-link communication method provided by an embodiment of the present disclosure.
FIG. 5 is another flow chart showing a multi-link communication method provided by an embodiment of the present disclosure.
FIG. 6 is an interactive schematic diagram showing a multi-link communication method provided by an embodiment of the present disclosure.
FIG. 7 is another interactive schematic diagram showing a multi-link communication method provided by an embodiment of the present disclosure.
FIG. 8 is yet another interactive schematic diagram showing a multi-link communication method provided by an embodiment of the present disclosure.
FIG. 9 is another interactive schematic diagram showing a multi-link communication method provided by an embodiment of the present disclosure.
FIG. 10 is an illustrative block diagram showing a multi-link communication apparatus provided by an embodiment of the present disclosure.
FIG. 11 is another illustrative block diagram showing a multi-link communication apparatus provided by an embodiment of the present disclosure.
FIG. 12 is a schematic diagram showing a terminal device or an access point suitable for implementing an embodiment of the present disclosure.

### DETAILED DESCRIPTION

The present disclosure will be further described in detail below with reference to the accompanying drawings and embodiments of the present disclosure. It is to be understood that the embodiments described herein are merely used to explain the relevant disclosure, but not to limit the present disclosure. In addition, it is to be noted that merely parts related to the present disclosure are shown in the accompanying drawings for the convenience of description.

It is to be noted that the embodiments in the present disclosure and features in the embodiments may be combined with each other without conflict. That is, based on the embodiments in the present disclosure, all other embodiments obtained by those skilled in the art without creative labor shall fall within the protection scope of the present disclosure.

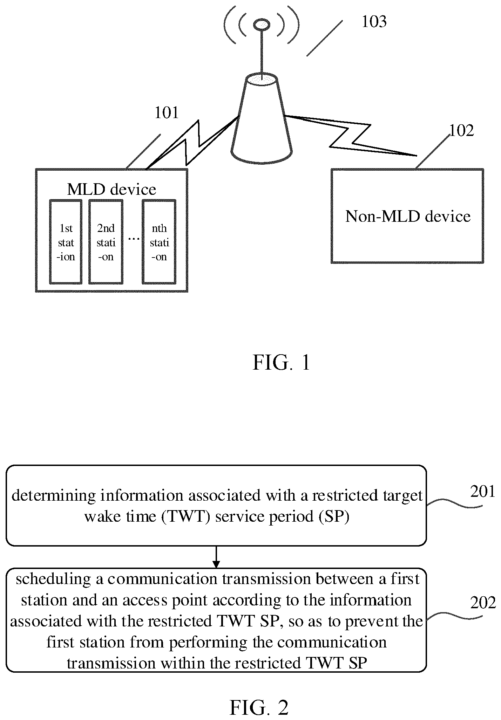

The present disclosure will be described in detail below with reference to the accompanying drawings and in conjunction with the embodiments. Referring to FIG. 1, which is a schematic diagram showing a multi-link communication application scenario provided by an embodiment of the present disclosure. An embodiment of the present disclosure may be applied to a wireless local area network (WLAN), and a standard adopted may be IEEE802.11 series.

A multi-link device (abbreviated as MLD) refers to a device with an IEEE802.11be function. The multi-link device may work on different links or different frequency bands at the same time, or complete a data transmission in a shorter time by rapidly switching links, thus increasing a target maximum throughput by 30Gbps. In an embodiment, one link corresponds to one frequency band.

The multi-link device may include two or more logical functional entities (e.g., station, STA), and each logical functional entity performs data transmission via a link, respectively. Each STA may also include multiple links or switch over different links for data transmission. The multi-link device may also manage and coordinate media access control address (abbreviated as MAC) layer functions provided by functional entities of each logic in a unified way, and provide data interfaces to upper layers in a unified way. The multi-link device may be divided into a multi-link device that does not support simultaneous transmission & reception (STR) and a multi-link device that supports simultaneous transmission & reception. The multi-link device may support various WLAN standards including but not restricted to IEEE802.11be standard.

A non-simultaneously transmit & receive (STR) multi-link device (abbreviated as Non-STR MLD) includes one or more logical functional entities station (i.e., STA). Each functional entity may transmit data via a link. In some embodiments, based on a configuration of a technical solution, the functional entity may also support multiple links, including but not restricted to link 1 and link 2, for example. Since the Non-STR MLD may include multiple STAs, it may transmit data on multiple links. However, when the Non-STR MLD sends data frames on link 1, link 2 may merely send data frames at the same time, and cannot receive data frames. That is, the Non-STR MLD does not support a function of simultaneous transmission & reception. The Non-STR MLD may include, but is not restricted to one, two, three or more stations.

A simultaneously transmit & receive multi-link device (abbreviated as STR MLD) includes link 1 and link 2. When data frames is sent on link 1, the link 2 may receive data frames at the same time. That is, the STR MLD supports a function of simultaneous transmission & reception.

A multi-link device (MLD) 101, or a station in the MLD device being a first station is an interference station, which may interfere with a communication transmission of a second station in a restricted target wake time (TWT) service period (SP) when performing a communication transmission with an access point (AP). The first station 101 may be the above-mentioned non-simultaneously transmit & receive (STR) multi-link device, or a station in the non-simultaneously transmit & receive multi-link device, or a simultaneously transmit & receive multi-link device, a station in the simultaneously transmit & receive multi-link device, or a station of non-802. 1 1be, that is, a non-MLD.

Anon-multi-link device (MLD) being a second station 102 is an owner of the restricted target wake time (TWT) service period (SP) (that is, the second station is configured with the restricted TWT SP). The second station 102 may be the above-mentioned non-simultaneously transmit & receive (STR) multi-link device, and a station in the non-simultaneously transmit & receive multi-link device.

An access point 103 (abbreviated as AP) may also be referred to as a wireless access point, which refers to a central node of a network. The access point 103 includes, but is not restricted to, a wireless router, a terminal device or a network device with a wireless fidelity (Wi-Fi) chip, etc. The access point 103 may support various WLAN standards including but not restricted to IEEE802.11be standard.

In the process of formulating the IEEE802.1 The standard, for a transmission of periodic TSN data, it is proposed that merely a corresponding station (STA) may access for a communication transmission (TSN data) within the restricted target wake time (TWT) service period (SP), and other stations cannot access for communication. For example, STA1 and STA2 stations belonging to different physical entities communicate with the access point (AP), respectively. Alternatively, STA1 and STA2 stations belonging to a same Non-STR STA MLD communicate with the access point (AP), respectively. The first station (STA2) performs a communication transmission with the AP. If a more data subdomain in a MAC frame header of a MAC data frame sent by the first station (STA2) is set to "1", it means that the first station (STA2) still has data to be transmitted, and a length of a duration subdomain may have been set as: this data length +2SIFS+2*ACK length +pending data length. A process of a communication transmission between the first station (STA2) and the access point (AP) may partially or fully overlap with the restricted TWT SP of the second station (STA1), resulting in interference with the communication transmission within the restricted TWT SP of the second station (STA1) in the process of the multi-link communication. However, such interference is not allowed for the second station (STA1), because data for the communication transmission within the restricted TWT SP is highly time sensitive.

In order to solve the above-mentioned problems, the present disclosure provides a multi-link communication method to avoid the problem that may interfere with the communication within the restricted TWT SP in the process of the multi-link communication.

Referring to FIG. 2, which is a flow chart showing a multi-link communication method provided by an embodiment of the present disclosure. As shown in FIG. 2, the method may be implemented by the first station (i.e., STA2). The method includes step 201 and step 202.

In step 201, information associated with a restricted target wake time (TWT) service period (SP) is determined.

In step 202, a communication transmission between a first station and an access point is scheduled according to the information associated with the restricted TWT SP, so as to prevent the first station from performing the communication transmission within the restricted TWT SP.

In the above-mentioned steps, it is assumed that the first station (STA2) and the first station (STA2) are two stations in a same Non-STR MLD (i.e., a physical entity).

The second (STA1) is an owner of the restricted TWT SP, which may be represented as a Non-STR STA.

The first station (STA2) is an interference station that interferes with the communication transmission within the restricted TWT SP.

As mentioned above, the information associated with the restricted target wake time (TWT) service period (SP) includes, but is not restricted to, a start time or an end time of the restricted TWT SP, or a time offset of the restricted TWT SP with respect to the first station.

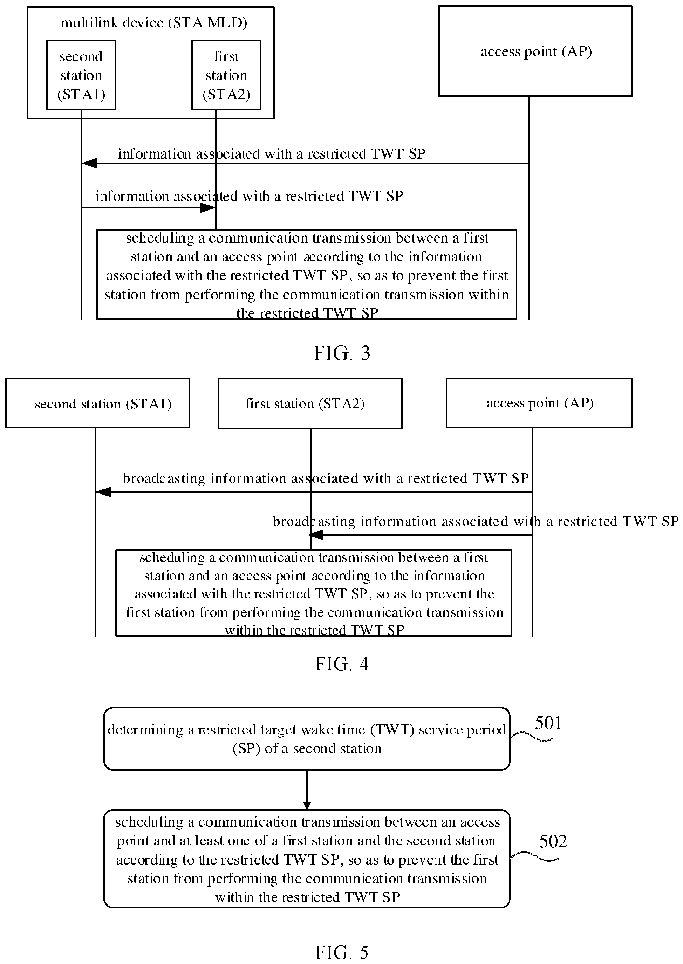

As shown in FIG. 3, when the first station and the second station perform communication transmissions with the access point, respectively, the second station (STA1) communicates with the access point (AP) within the restricted TWT SP, and the first station (STA2) may continue to perform communication transmissions with the access point (AP) in a case of unknown the restricted TWT SP of STA1, resulting in a conflict in communication between the two stations and the access point (AP).

An embodiment of the present disclosure provides that sending the restricted TWT SP to the second station (STA1) at the access point (AP) may manage and coordinate in a unified way the data transmission between STAs through a MAC layer function of a multi-link device that does not supports simultaneous transmission & reception. That is, the information associated with the restricted TWT SP is received inside the multi-link device that does not support simultaneous transmission & reception. The information associated with the restricted TWT SP is sent from the second station to the first station inside the Non-STR MLD.

When the second station (STA1) receives the information associated with the restricted target wake time service period configured for the second station (STA1) from the access point (AP), the information associated with the restricted target wake time service period may be sent to the first station (STA2) through a media access control command.

Under a condition that the first station (STA2) knows the information associated with the restricted target wake time service period of the second station (STA1), the MAC layer function inside the Non-STR MLD may be coordinated in a unified way, thus avoiding conflicts between communication transmissions of different links and the restricted TWT SP. For example, the first station (STA2) may prevent its own communication transmission from occurring during the restricted TWT SP based on the information associated with the restricted target wake time service period.

As shown in FIG. 4, the first station (STA2) is an MLD device communicating with the access point (AP), or a station in the MLD device. The second station (STA1) is a Non-STR MLD (i.e., a physical entity), or a station (Non-STR STA) in the Non-STR MLD.

When the first station (STA2) receives the information associated with the restricted TWT SP sent by the access point (AP) in a broadcast manner, the first station (STA2) schedules the communication transmission between the first station and the access point according to the information associated with the restricted TWT SP, so as to prevent the first station from performing the communication transmission with the access point within the restricted TWT SP.

Preventing the first station from performing the communication transmission within the restricted TWT SP includes prohibiting the first station from sending pending remaining data within the restricted TWT SP. That is, the first station is prohibited from sending pending remaining data, which interferes with the communication transmission within the restricted TWT SP of the second station.

On the basis of the above-mentioned embodiment, the method may further include the first station (STA1) determining the restricted TWT SP based on the information associated with the restricted TWT SP. For example, the restricted TWT SP may be determined according to the start time and the end time of the restricted TWT SP. It is to be noted that the restricted TWT SP is for the second station (STA2). Since the first station (STA1) and the second station (STA2) communicate on different links, there may be an offset between time sequence positions of the restricted TWT SP relative to the first station (STA1) and the second station (STA2). Therefore, in addition to sending the start time and the end time of the restricted TWT SP, an offset value of the restricted TWT SP relative to the first station in a time domain may also be sent for the first station to calculate an actual position of the restricted TWT SP.

In the embodiment of the present disclosure, the first station may prevent the communication transmission between the first station and the access point from interfering with the communication transmission within the restricted TWT SP of the second station according to received information associated with the restricted TWT SP, so that a system throughput may be improved in different business scenarios.

The communication transmission between the above-mentioned first station and the access point causes interference with the communication transmission of the second station within the restricted TWT SP, and control from an access point side may also be considered. Referring to FIG. 5, which is another flow chart showing a multi-link communication method provided by an embodiment of the present disclosure. As shown in FIG. 5, the method may be implemented by the access point (AP). The method includes step 501, and step 502.

In step 501, a restricted target wake time (TWT) service period (SP) of a second station is determined.

In step 502, a communication transmission between an access point and at least one of a first station and the second station is scheduled according to the restricted TWT SP, so as to prevent the first station from performing the communication transmission within the restricted TWT SP.

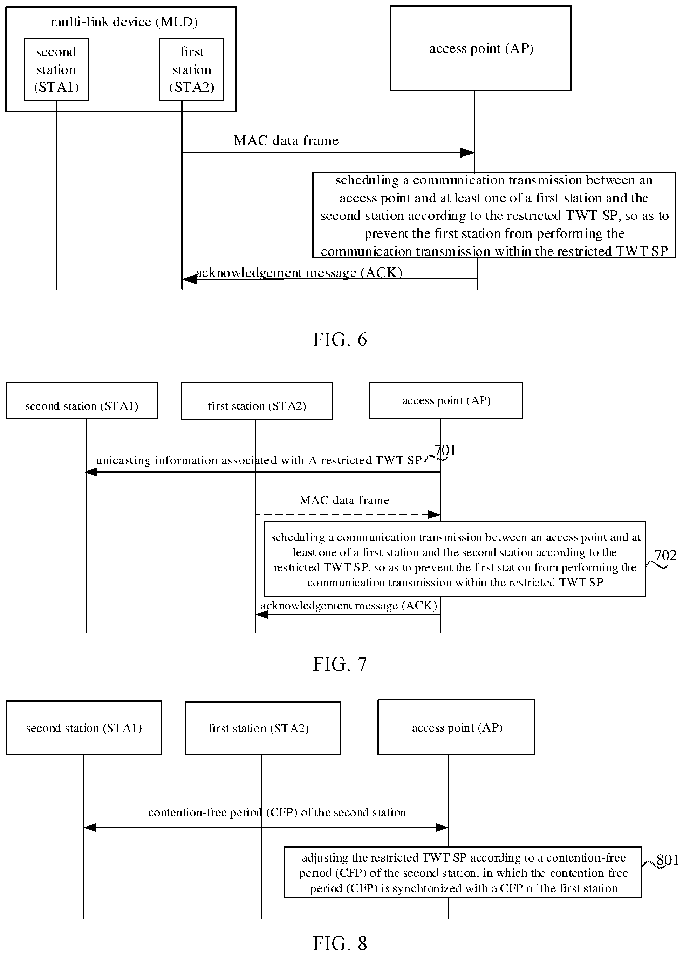

In the above-mentioned steps, as shown in FIG. 6, when two or more stations in the Non-STR MLD communicate with the access point, the first station and the second station are two stations in the Non-STR MLD (i.e., a physical entity). The second station (STA1) is an owner of the restricted TWT SP, which may be represented as a Non-STR STA. The first station (STA2) is an interference station that interferes with the communication transmission within the restricted TWT SP.

The second station (STA1) is configured to communicate with the access point (AP) within the restricted TWT SP. The first station (STA2) continues to perform the communication transmission with the access point (AP) in the case of unknown the restricted TWT SP of STA1. The access point (AP) receives a header of a MAC data frame sent by the first station (STA2), parses same, and the access point (AP) may know whether the first station (STA2) continues to send data frames.

When the first station (STA2) continues to send data frames, since the access point (AP) has been known the restricted TWT SP negotiated with the second station (STA1), the access point (AP) may decide whether to receive the data frames continued to be sent by the first station (STA2) according to a first identifier contained in the header of the data frame sent by the first station (STA2) and the restricted TWT SP of the second station (STA1).

The above-mentioned first identifier refers to an identifier field configured to indicate whether the data frame will continue to be sent, including but not restricted to identifier information set by the more data subdomain in the header of the media access control data frame. For example, if the more data subdomain is set to "1", it indicates that STA2 still has data to be transmitted.

On the basis of the above-mentioned embodiment, the access point (AP) may send an acknowledgment message to the first station (STA2) according to the restricted TWT SP. The acknowledgment message is configured to inform the first station that the access point receives or does not receive the communication transmission from the first station during the TWT SP. That is, the acknowledgment message may indicate whether pending data in the MAC data frame to be transmitted by the first station is allowed to be received, that is, the pending remaining data is sent.

When the access point (AP) determines that a time point of the restricted target wake time service period of the second station (STA1) does not conflict with a sending time point of the pending data in the data frame continued to be sent by the first station (STA2), the access point (AP) may send a first acknowledgment message (ACK), which is configured to indicate that the pending data in the data frame sent by the first station (STA2) is allowed to continue to be received.

When the access point (AP) determines that a time point of the restricted target wake time service period of the second station (STA1) conflicts with a sending time point of the pending data in the data frame continued to be sent by the first station (STA2), the access point (AP) sends a second acknowledgment message (ACK), which is configured to indicate that the pending data in the data frame sent by STA2 is not allowed to continue to be received, so as to prevent the first station from performing the communication transmission within the restricted TWT SP.

Embodiments of the present disclosure in the above-mentioned manner, the access point schedules the communication transmission between the access point and at least one of the first station and the second station according to the restricted TWT SP, so as to prevent the first station from performing the communication transmission within the restricted TWT SP.

For another example, the second station (STA1) is the owner of the restricted TWT SP and may be represented as a Non-STR STA, which may be a non-STR MLD or a station in the non-STR MLD. The first station (STA2) is an interference station that interferes with the communication transmission within the restricted TWT SP. The first station may be an MLD (i.e., a physical entity) or a station in the MLD, which may be a Non-STR STA or a STR STA. The first station and the second station belong to different physical entities, or stations in different physical entities. FIG. 7 depicts the multi-link communication method in the communication scenario. FIG. 7 is an interactive schematic diagram showing a multi-link communication method provided by an embodiment of the present disclosure. As shown in FIG. 7, the method may be implemented by the access point (AP). The access point (AP) communicates with the first station (STA2) and the second station (STA1), respectively. The access point (AP) sends the information associated with the restricted target wake time service period to the second station (STA1) by unicast.

After the access point (AP) negotiates with the second station (STA1) to determine the restricted TWT SP configured for the second station (STA1), the information associated with the restricted TWT SP may be generated based on the restricted TWT SP, and the information associated with the restricted TWT SP is sent to the second station (STA1).

In step 701, the access point (AP) sends the information associated with the restricted target wake time service period to the second station (STA1) by unicast.

In step 702, the access point (AP) sends an acknowledgment message to the first station (STA2) according to the restricted TWT SP.

That is, the access point receives the header of the media access control (MAC) data frame sent by the first station. The access point (AP) parses the header of the MAC data frame to obtain a second identifier. The access point (AP) sends an acknowledgment message to the first station according to the second identifier and the restricted target wake time service period. The above-mentioned acknowledgment message has the same function as the acknowledgment message in the above-mentioned scenario. Functions of the first identifier and the second identifier are the same, which will not be elaborated herein.

After the access point (AP) negotiates the restricted target wake time service period with the second station (STA1), the access point (AP) has been known the restricted target wake time service period configured by the second station (STA1).

When the access point (AP) determines that a time point of the restricted target wake time service period of the second station (STA1) does not conflict with a sending time point of the pending data in the data frame continued to be sent by the first station (STA2), the access point (AP) may send a first acknowledgment message (ACK), which is configured to indicate that the pending data in the data frame sent by a second multi-link device (STA2) is allowed to continue to be received.

When the access point (AP) determines that a time point of the restricted target wake time service period of the second station (STA1) conflicts with a sending time point of the pending data in the data frame continued to be sent by the first station (STA2), the access point (AP) sends a second acknowledgment message (ACK), which is configured to indicate that the pending data in the data frame sent by the first station (STA2) is not allowed to continue to be received.

In an embodiment of the present disclosure, when the first station belongs to a MLD and the second station belongs to a non-STR MLD to communicate with the access point (AP), respectively, the access point may schedule the communication transmission between the access point and at least one of the first station and the second station according to the restricted TWT SP, so as to prevent the first station from performing the communication transmission within the restricted TWT SP, thus avoiding the interference with the communication transmission of the second station within the restricted TWT SP.

For another example, the second station (STA1) is the owner of the restricted TWT SP and may be represented as a Non-STR STA, which may be a non-STR MLD or a station in a non-STR MLD. The first station (STA2) is an interference station that interferes with the communication transmission within the restricted TWT SP. The first station may be a legacy STA, that is, a non-MLD (i.e., a physical entity), or a station that in the non-MLD. FIG. 8 depicts the multi-link communication method implemented by the AP in the communication scenario. FIG. 8 is an interactive schematic diagram showing a multi-link communication method provided by an embodiment of the present disclosure. As shown in FIG. 8, the method may be implemented by the access point (AP). The access point (AP) communicates with the first station (STA2) and the second station (STA1), respectively. The access point (AP) sends a restricted target wake time service period to the second station. The second station performs the communication transmission with the access point (AP) within the restricted target wake time service period. The first station (STA2) performs the communication transmission with the access point (AP). The method includes step 801.

In step 801, the access point (AP) adjusts the restricted TWT SP according to a contention-free period (CFP) of the second station, in which the contention-free period (CFP) is synchronized with a CFP of the first station.

The above-mentioned adjustment means that the access point (AP) negotiates with the second station to adjust the restricted TWT SP to the contention-free period (CFP) of the second station. The CFP of the first station and the CFP of the second station are synchronized in time.

According to an embodiment of the present disclosure, when the second station is a non-MLD and the first station is a non-STR MLD, the access point may adjust the restricted TWT SP through the contention-free period of the second station, and the communication transmission of the first station within the restricted TWT SP may also be avoided.

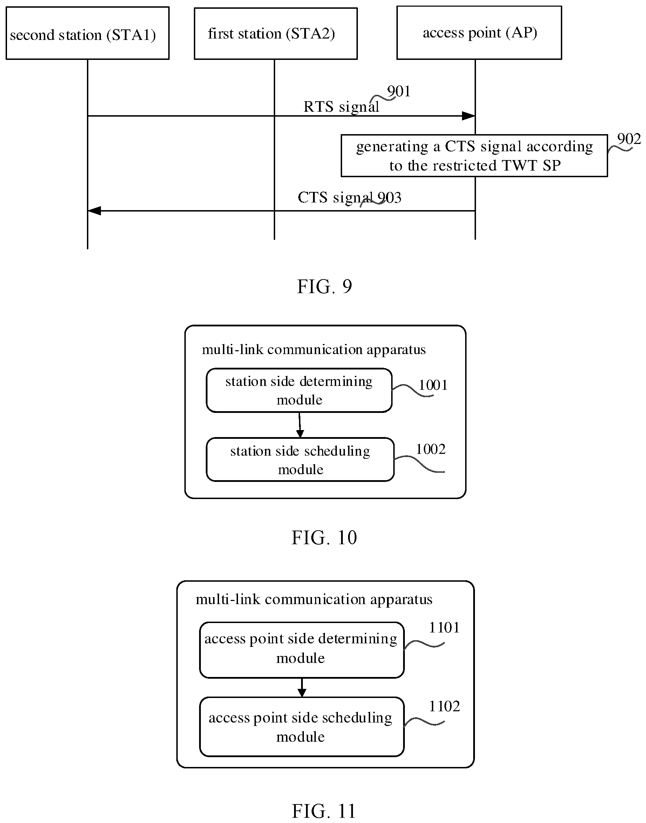

For another example, the second station (STA1) is the owner of the restricted TWT SP and may be represented as a Non-STR STA, which may be a non-STR MLD (i.e., a physical entity) or a station in the non-STR MLD. The first station (STA2) is an interference station that interferes with the communication transmission within the restricted TWT SP. The first station may be a legacy STA, that is, a non-MLD (i.e., a physical entity), or a station in the non-MLD. FIG. 9 depicts the multi-link communication method implemented by the second station in the communication scenario. FIG. 9 is a flow chart showing a multi-link communication method provided by an embodiment of the present disclosure. As shown in FIG. 9, when the access point (AP) communicates with the first station and the second station, respectively, the access point (AP) negotiates the restricted target wake time service period with the second station (STA1). The second station (STA1) performs the communication transmission with the access point (AP) within the restricted target wake time service period. The method includes step 901, step 902, and step 903.

In step 901, the second station (STA1) sends a request to send (RTS) signal to the access point (AP).

In step 902, the second station (STA1) receives a clear to send (CTS) signal returned by the access point (AP) according to the restricted target wake time service period, and the CTS signal is generated by the access point according to the restricted TWT SP.

In step 903, the second station (STA1) responds to the clear to send to prevent the first station from performing the communication transmission with the access point within the restricted TWT SP.

In the above-mentioned steps, the second station (STA1) may negotiate the restricted target wake time service period with the access point (AP). The access point (AP) knows the restricted target wake time service period of the second station (STA1). However, when the second station (STA1) does not know information of other stations connected with the access point (AP), the second station may try to prevent the communication transmission between the second station and the access point within the restricted TWT from being interfered by other stations through a RTS/CTS mechanism.

The second station may send the request to send (RTS) signal to the access point (AP) at the start time of the restricted TWT SP. The second station performs the communication transmission with the access point (AP) within the restricted TWT SP when receiving the request to send (RTS) signal returned by the access point (AP). When the second station does not receive the clear to send (CTS) signal returned by the access point (AP), the communication transmission is not started.

It is to be noted that although operations of the disclosed method are described in a particular order in the accompanying drawings, this does not require or imply that these operations must be performed in that particular order, or that all the illustrated operations must be performed to achieve desired results. On the contrary, the steps depicted in the flow chart may change the order of execution. Additionally or alternatively, some steps may be omitted, multiple steps may be combined into one step for execution, and/or one step may be decomposed into multiple steps for execution.

Further referring to FIG. 10, which is an illustrative block diagram showing a multi-link communication apparatus provided by an embodiment of the present disclosure. The multi-link communication apparatus may be realize by a processing system in a multi-link device. The multi-link communication apparatus includes a station side determining module 1001, and a station side scheduling module 1002.

The station side determining module 1001 is configured to determine information associated with a restricted target wake time (TWT) service period (SP).

The station side scheduling module 1002 is configured to schedule a communication transmission between a first station and an access point according to the information associated with the restricted TWT SP, so as to prevent the first station from performing the communication transmission within the restricted TWT SP.

The station side determining module is configured to receive the information associated with the restricted TWT SP from a second station or the access point, in which the restricted TWT SP is configured for the second station.

The station side determining module is further configured to determine the restricted TWT SP based on the information associated with the restricted TWT SP.

The first station and the second station belong to a non-simultaneously transmit & receive (STR) multi-link device (MLD), and the information associated with the restricted TWT SP is sent to the first station by the second station within the non-STR MLD.

The information associated with the restricted TWT SP indicates at least one of: a start time or an end time of the restricted TWT SP, or a time offset of the restricted TWT SP with respect to the first station.

The second station belongs to a non-STR MLD, and the first station is a non-MLD.

When the first station belongs to an MLD and the second station belongs to a non-STR MLD, and the information associated with the restricted TWT SP is received from the access point by broadcast.

Preventing the first station from performing the communication transmission within the restricted TWT SP includes prohibiting the first station from sending pending remaining data within the restricted TWT SP.

Referring to FIG. 11, which is an illustrative block diagram showing a multi-link communication apparatus provided by an embodiment of the present disclosure. The multi-link communication apparatus may be realize by a processing system in an access point. The multi-link communication apparatus includes an access point side determining module 1101, and an access point side scheduling module 1102.

The access point side determining module 1101 is configured to determine a restricted target wake time (TWT) service period (SP) of a second station.

The access point side scheduling module 1102 is configured to schedule a communication transmission between an access point and at least one of a first station and the second station according to the restricted TWT SP, so as to prevent the first station from performing the communication transmission within the restricted TWT SP.

When the first station and the second station belong to a non-simultaneously transmit & receive (STR) multi-link device (MLD), the access point side scheduling module is configured to send an acknowledgment message to the first station according to the restricted TWT SP.

When the first station belongs to a non-MLD, the second station belongs to a non-STR MLD, the access point side scheduling module is further configured to adjust the restricted TWT SP according to a contention-free period (CFP) of the second station, in which the contention-free period (CFP) is synchronized with a CFP of the first station.

The apparatus further includes a generating module, and a sending module.

The generating module is configured to generate information associated with the restricted TWT SP based on the restricted TWT SP.

The sending module is configured to send the information associated with the restricted TWT SP.

The acknowledgment message is configured to inform the first station that the access point receives or does not receive the communication transmission from the first station during the TWT SP.

The first station belongs to a MLD, and the second station belongs to a non-STR MLD.

If the information associated with the restricted TWT SP is sent to the second station by unicast, the access point side scheduling module is configured to send an acknowledgment message to the first station according to the restricted TWT SP.

When the first station belongs to the MLD, and the second station belongs to the non-STR MLD, the access point side scheduling module is configured to adjust the restricted TWT SP according to a contention-free period (CFP) of the second station, in which the contention-free period (CFP) is synchronized with a CFP of the first station.

Preventing the first station from performing the communication transmission within the restricted TWT SP includes prohibiting the first station from sending pending remaining data within the restricted TWT SP.

It is to be understood that the units or modules described in the above-mentioned apparatus correspond to the steps in the method described with reference to FIGS. 2 to 9. Therefore, the operations and features described above for the method are also applicable to the above-mentioned apparatus and the units contained therein, which will not be elaborated herein. This division is not mandatory for the several modules or units mentioned in the detailed description above. In fact, according to the embodiments of the present disclosure, the features and functions of two or more modules or units described above may be embodied in one module or unit. On the contrary, the features and functions of one module or unit described above may be further divided into being embodied by multiple modules or units.

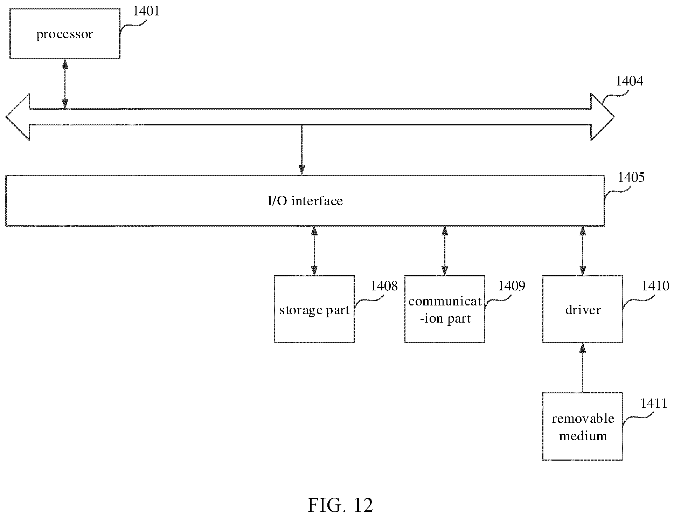

Referring to FIG. 12 below, FIG. 12 is a schematic diagram showing a terminal device or an access point suitable for implementing an embodiment of the present disclosure.

As shown in FIG. 12, it includes a processor 1401 configured to perform the methods described above in FIGS. 2 to 9. The processor 1401 are connected to each other via a bus 1404. An input/output (I/O) interface 1405 is also connected to the bus 1404.

A communication part 1409 includes a network interface card such as a LAN card, a modulator-demodulator, etc. The communication part 1409 performs communication processing via a network such as Internet. A driver 1410 is also connected to the I/O interface 1405 as needed.

A removable medium 1411, such as a magnetic disk, an optical disk, a magneto-optical disk, a semiconductor memory, etc., is installed on the drive 1410 as needed, so that a computer program read from it may be installed into a storage part 1408 as needed.

In particular, according to embodiments of the present disclosure, processes described above with reference to flow charts FIGS. 2 to 9 may be implemented as a computer software program. For example, an embodiment of the present disclosure includes a computer program product, which includes a computer program carried on a machine-readable medium, and the computer program contains a program code for executing the method shown in the flow chart. In such an embodiment, the computer program may be downloaded and installed from the network via the communication part 1409, and/or installed from the removable medium 1411. When the computer program is executed by a processing unit 1401, the above-mentioned functions defined in the system of the present disclosure are performed.

It is to be noted that the computer-readable medium shown in the present disclosure may be a computer-readable signal medium or a computer-readable storage medium or any combination thereof. The computer-readable storage medium may be, for example, but not limited to, a system of electrical, magnetic, optical, electromagnetic, infrared, or semiconductor, an apparatus, or a device, or any combination thereof. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical memory device, a magnetic memory device, or any suitable combination thereof. In the present disclosure, the computer-readable storage medium may be any tangible medium containing or storing a program. The program may be used by an instruction execution system, an apparatus, or a device or in combination therewith. In the present disclosure, the computer-readable signal medium may include a data signal propagated in a baseband or as part of a carrier wave, in which a computer-readable program code is carried. This propagated data signal may take many forms, including but not limited to an electromagnetic signal, an optical signal or any suitable combination thereof. The computer-readable signal medium may also be any computer-readable medium other than the computer-readable storage medium. The computer-readable medium may send, propagate or transmit the program used by the instruction execution system, the apparatus, or the device or in combination therewith. The program code contained in the computer-readable medium may be transmitted by any suitable medium, including but not limited to a wireless, a wire, an optical cable, a RF, etc., or any suitable combination thereof.

The flow charts and block diagrams in the accompanying drawings illustrate architectures, functions and operations of possible implementations of systems, methods and computer program products according to various embodiments of the present disclosure. In this regard, each block in the flow chart or block diagram may represent a module, a program segment, or a part of code. The module, the program segment, or the part of code contains one or more executable instructions for implementing specified logical functions. It is also to be noted that in some alternative implementations, the functions indicated in the blocks may occur in a different order than those indicated in the accompanying drawings. For example, two successively represented blocks may actually be executed substantially in parallel, and they may sometimes be executed in a reverse order, depending on the functions involved. It is also to be noted that each block in the block diagrams and/or flow charts, and combinations of blocks in the block diagrams and/or flow charts, may be implemented by a dedicated hardwarebased system that performs specified functions or operations, or by a combination of dedicated hardware and computer instructions.

The units or modules described in the embodiments of the present disclosure may be implemented by software or hardware. The described units or modules may also be disposed in a processor. For example, it may be described that a processor includes XX unit, YY unit and ZZ unit. Names of these units or modules do not constitute the limitation of the unit or module itself in some cases. For example, the XX unit may also be described as "a unit for XX".

On the other hand, the present disclosure also provides a computer-readable storage medium. The computer-readable storage medium may be included in the electronic device described in the above-mentioned embodiment, or may also exist alone and not be incorporated into the electronic device. The above-mentioned computer-readable storage medium store one or more programs that, when executed by one or more processors, cause the multi-link communication method described in the present disclosure to be implemented.

In an embodiment, the present disclosure provides a multi-link communication method. The method includes determining information associated with a restricted target wake time (TWT) service period (SP), and scheduling a communication transmission between a first station and an access point according to the information associated with the restricted TWT SP, so as to prevent the first station from performing the communication transmission within the restricted TWT SP.

In an embodiment, the communication method includes determining the information associated with the restricted target wake time (TWT) service period (SP) including receiving the information associated with the restricted TWT SP from a second station or the access point, in which the restricted TWT SP is configured for the second station.

In an embodiment, the communication method includes determining the restricted TWT SP based on the information associated with the restricted TWT SP.

In an embodiment, the communication method includes the first station and the second station belonging to a non-simultaneously transmit & receive (STR) multi-link device (MLD), and the information associated with the restricted TWT SP being sent to the first station by the second station within the non-STR MLD.

In an embodiment, the communication method includes the information associated with the restricted TWT SP indicating at least one of: a start time or an end time of the restricted TWT SP, or a time offset of the restricted TWT SP with respect to the first station.

In an embodiment, the communication method includes the second station belonging to a non-STR MLD, and the first station being a non-MLD.

In an embodiment, the communication method includes the first station belonging to an MLD and the second station belonging to a non-STR MLD, and the information associated with the restricted TWT SP being received from the access point by broadcast.

In an embodiment, the communication method includes preventing the first station from performing the communication transmission within the restricted TWT SP including prohibiting the first station from sending pending remaining data within the restricted TWT SP.

In another embodiment, the present disclosure also provides a multi-link communication method. The method includes determining a restricted target wake time (TWT) service period (SP) of a second station, and scheduling a communication transmission between an access point and at least one of a first station and the second station according to the restricted TWT SP, so as to prevent the first station from performing the communication transmission within the restricted TWT SP.

In an embodiment, the communication method includes the first station and the second station belonging to a non-simultaneously transmit & receive (STR) multi-link device (MLD), and scheduling the communication transmission between the access point and at least one of the first station and the second station according to the restricted TWT SP including sending an acknowledgment message to the first station according to the restricted TWT SP.

In an embodiment, the communication method includes the first station belonging to a non-MLD, the second station belonging to a non-STR MLD, and scheduling the communication transmission between the access point and at least one of the first station and the second station according to the restricted TWT SP including adjusting the restricted TWT SP according to a contention-free period (CFP) of the second station, in which the contention-free period (CFP) is synchronized with a CFP of the first station.

In an embodiment, the communication method further includes generating information associated with the restricted TWT SP based on the restricted TWT SP, and sending the information associated with the restricted TWT SP.

In an embodiment, the communication method includes the acknowledgment message being configured to inform the first station that the access point receives or does not receive the communication transmission from the first station during the restricted TWT SP.

In an embodiment, the communication method includes the first station belonging to a MLD, and the second station belonging to a non-STR MLD.

In an embodiment, the communication method includes the information associated with the restricted TWT SP being sent to the second station by unicast, and scheduling the communication transmission between the access point and at least one of the first station and the second station according to the restricted TWT SP including sending an acknowledgment message to the first station according to the restricted TWT SP.

In an embodiment, the communication method includes scheduling the communication transmission between the access point and at least one of the first station and the second station according to the restricted TWT SP including adjusting the restricted TWT SP according to a contention-free period (CFP) of the second station, in which the contention-free period (CFP) is synchronized with a CFP of the first station.

In an embodiment, the communication method includes preventing the first station from performing the communication transmission within the restricted TWT SP including prohibiting the first station from sending pending remaining data within the restricted TWT SP.

The above description is merely a preferred embodiment of the present disclosure and is illustrative of the principles of the technology employed. It is to be understood by those skilled in the art that the scope of disclosure involved in the present disclosure is not limited to the technical solution formed by the specific combination of the above-mentioned technical features, but also covers other technical solutions formed by any combination of the above-mentioned technical features or their equivalent features without departing from the above-mentioned disclosure concept. For example, technical solution formed by replacing the above-mentioned features with the technical features disclosed in the present disclosure (but not limited to) having similar functions.

## Claims

1. A multi-link communication method, comprising:
determining information associated with a restricted target wake time (TWT) service period (SP); and
scheduling a communication transmission between a first station and an access point according to the information associated with the restricted TWT SP, so as to prevent the first station from performing the communication transmission within the restricted TWT SP.

2. The communication method of claim 1, determining the information associated with the restricted target wake time (TWT) service period (SP) comprising:
receiving the information associated with the restricted TWT SP from a second station or the access point, wherein the restricted TWT SP is configured for the second station.

3. The communication method of claim 2, further comprising:
determining the restricted TWT SP based on the information associated with the restricted TWT SP.

4. The communication method of claim 2, wherein the first station and the second station belong to a non-simultaneously transmit & receive (STR) multi-link device (MLD), and the information associated with the restricted TWT SP is sent to the first station by the second station within the non-STR MLD.

5. The communication method of claim 4, wherein the information associated with the restricted TWT SP indicates at least one of: a start time or an end time of the restricted TWT SP, or a time offset of the restricted TWT SP with respect to the first station.

6. The communication method of claim 2, wherein the second station belongs to a non-STR MLD, and the first station is a non-MLD.

7. The communication method of claim 2, wherein the first station belongs to an MLD and the second station belongs to a non-STR MLD, and the information associated with the restricted TWT SP is received from the access point by broadcast.

8. The communication method of claim 1, wherein preventing the first station from performing the communication transmission within the restricted TWT SP comprises prohibiting the first station from sending pending remaining data within the restricted TWT SP.

9. A multi-link communication method, comprising:
determining a restricted target wake time (TWT) service period (SP) of a second station; and
scheduling a communication transmission between an access point and at least one of a first station and the second station according to the restricted TWT SP, so as to prevent the first station from performing the communication transmission within the restricted TWT SP.

10. The communication method of claim 9, wherein the first station and the second station belong to a non-simultaneously transmit & receive (STR) multi-link device (MLD), and scheduling the communication transmission between the access point and at least one of the first station and the second station according to the restricted TWT SP comprises sending an acknowledgment message to the first station according to the restricted TWT SP.

11. The communication method of claim 9, wherein the first station belongs to a non-MLD, the second station belongs to a non-STR MLD, and scheduling the communication transmission between the access point and at least one of the first station and the second station according to the restricted TWT SP comprises adjusting the restricted TWT SP according to a contention-free period (CFP) of the second station, wherein the contention-free period (CFP) is synchronized with a CFP of the first station.

12. The communication method of claim 9, further comprising:
generating information associated with the restricted TWT SP based on the restricted TWT SP; and
sending the information associated with the restricted TWT SP.

13. The communication method of claim 10, wherein the acknowledgment message is configured to inform the first station that the access point receives or does not receive the communication transmission from the first station during the TWT SP.

14. The communication method of claim 12, wherein the first station belongs to a MLD, and the second station belongs to a non-STR MLD.

15. The communication method of claim 14, wherein the information associated with the restricted TWT SP is sent to the second station by unicast, and scheduling the communication transmission between the access point and at least one of the first station and the second station according to the restricted TWT SP comprises sending an acknowledgment message to the first station according to the restricted TWT SP.

16. The communication method of claim 14, wherein scheduling the communication transmission between the access point and at least one of the first station and the second station according to the restricted TWT SP comprises adjusting the restricted TWT SP according to a contention-free period (CFP) of the second station, wherein the contention-free period (CFP) is synchronized with a CFP of the first station.

17. The communication method of claim 9, wherein preventing the first station from performing the communication transmission within the restricted TWT SP comprises prohibiting the first station from sending pending remaining data within the restricted TWT SP.

18. A multi-link communication apparatus, comprising:
a station side determining module configured to determine information associated with a restricted target wake time (TWT) service period (SP); and
a station side scheduling module configured to schedule a communication transmission between a first station and an access point according to the information associated with the restricted TWT SP, so as to prevent the first station from performing the communication transmission within the restricted TWT SP.

19. A multi-link communication apparatus, comprising:
an access point side determining module configured to determine a restricted target wake time (TWT) service period (SP) of a second station; and
an access point side scheduling module configured to schedule a communication transmission between an access point and at least one of a first station and the second station according to the restricted TWT SP, so as to prevent the first station from performing the communication transmission within the restricted TWT SP.

20. A multi-link communication device, comprising:
a memory;
a processor; and
a computer program stored in the memory and executable on the processor,
wherein the processor is configured to implement the method of any one of claims 1 to 17 when running the computer program.

21. A computer-readable storage medium having stored therein computer programs that, when executed by a processor, cause the method of any one of claims 1 to 17 to be implemented.
